**Europäisches Patentamt**

**European Patent Office**

**Office européen des brevets**

(11) Veröffentlichungsnummer: **0 231 789**
**A2**

## (12) EUROPÄISCHE PATENTANMELDUNG

(21) Anmeldenummer: 87100515.3

(22) Anmeldetag: 16.01.87

(51) Int. Cl.4: **F24F 1/02** , **A01G 9/24** , **F24D 3/00**

(30) Priorität: 23.01.86 DE 3601973

(43) Veröffentlichungstag der Anmeldung:
12.08.87 Patentblatt 87/33

(84) Benannte Vertragsstaaten:
**AT BE CH DE ES FR GB IT LI LU NL**

(71) Anmelder: **Baumann, Walter**
**Pfarrgartenweg 1**
**D-7163 Oberrot-Hausen(DE)**

(72) Erfinder: **Baumann, Walter**
**Pfarrgartenweg 1**
**D-7163 Oberrot-Hausen(DE)**

(74) Vertreter: **Wuesthoff, Franz, Dr.-Ing. et al**
**Patentanwälte Wuesthoff -v.**
**Pechmann-Behrens-Goetz Schweigerstrasse**
**2**
**D-8000 München 90(DE)**

(54) Vorrichtung zum Klimatisieren eines Wintergartens.

(57) Eine Vorrichtung zum Klimatisieren eines Wintergartens und insbesondere dessen Entfeuchtung zur Vermeidung von Schwitz-und Kondenswasser weist ein Gehäuse (16) auf, in dem ein erster, ein zweiter und ein dritter Wärmetauscher (26, 28 bzw. 30) wahlweise an einen Kompressor 32 anschließbar sind. Die Wärmetauscher sind derart wahlweise mit dem Kompressor verbindbar, daß der Wintergarten bei Bedarf entfeuchtet, gekühlt oder erwärmt werden kann. Gleichzeitig ermöglicht die Vorrichtung die Gewinnung von Wärme aus dem Wintergarten zur Versorgung des Wohnhauses (10).

FIG. 4

## Vorrichtung zum Klimatisieren eines Wintergartens

Die Erfindung betrifft eine Vorrichtung zum Steuern der Temperatur und/oder Luftfeuchtigkeit in einem Wintergarten.

Unter einem Wintergarten ist ein weitestgehend durch Glas umgebener Raum zu verstehen, der entweder getrennt von einem Wohnhaus angeordnet ist oder bevorzugt weitgehend in das Wohnhaus integriert ist. Derartige Wintergärten ermöglichen die Pflege von Pflanzen, die in der freien Natur nicht überwintern könnten.

Die Klimatisierung eines Wintergartens, d.h. insbesondere die Steuerung seiner Temperatur und Luftfeuchtigkeit, stellt hohe bauphysikalische Anforderungen. Insbesondere ist zu beachten, daß ein Wintergarten bei Sonneneinstrahlung sich auch dann erheblich erwärmen kann, wenn in der freien Atmosphäre relativ tiefe Temperaturen vorliegen. Ein besonderes Problem stellt die Regelung der Luftfeuchtigkeit in einem Wintergarten dar. Herrscht im Inneren eines Wintergartens eine höhere Temperatur als in der äußeren Atmosphäre, so beschlagen bei zu hoher Luftfeuchte die Scheiben des Wintergartens mit Kondenswasser, was den Wohnwert des Wintergartens erheblich beeinträchtigt.

Soll ein Wintergarten ganzjährig bewohnbar sein, was insbesondere bei einer Integration des Wintergartens in das Wohnhaus erwünscht ist, so stellen sich auch erhebliche energietechnische Probleme. Zum einen erfordert der Wintergarten bei bestimmten klimatischen Bedingungen erhebliche Energiekosten zwecks Heizung, zum anderen muß aber auch berücksichtigt werden, daß ein Wintergarten bei wiederum anderen klimatischen Bedingungen umgekehrt eine Energiequelle für das Wohnhaus darstellen kann. Insbesondere bei sonnigem, kaltem Wetter nimmt der Wintergarten eine erhebliche Menge an Sonnenenergie auf, die nicht vergeudet werden sollte.

Der Erfindung liegt die Aufgabe zugrunde, eine Vorrichtung zu schaffen, mit der die Temperatur und/oder Luftfeuchtigkeit in einem Wintergarten ganzjährig steuerbar sind. Insbesondere soll die erfindungsgemäße Vorrichtung es auch ermöglichen, bei bestimmten klimatischen Bedingungen aus dem Wintergarten einem Wohnhaus Energie zuzuführen. Die Vorrichtung soll als kompakte Einheit im Wintergarten installierbar sein und ohne daß besondere Eingriffe seitens des Benutzers erforderlich wären, ganzjährig eine vollautomatische Klimatisierung des Wintergartens ermöglichen.

Erfindungsgemäß wird diese Aufgabe dadurch gelöst, daß die Vorrichtung zum Klimatisieren des Wintergartens ein Gehäuse aufweist, das mit folgenden Merkmalen versehen ist:
- einer Ansaugöffnung, durch die Luft aus dem Wintergarten in das Gehäuse gesaugt wird,
- einer Ausblasöffnung, durch die Luft aus dem Gehäuse in den Wintergarten gefördert wird,
- zumindest einem ersten und einem zweiten Wärmetauscher im Haupt-Strömungsweg der Luft zwischen der Ansaugöffnung und der Ausblasöffnung und
- einem Kompressor, der mit einem die beiden Wärmetauscher enthaltenden ersten Flüssigkeitskreislauf verbunden ist.

Um mit einer derartigen Vorrichtung auch aus dem Wintergarten bei günstigen klimatischen Bedingungen Energie für die Heizungsanlage oder die Warmwasserbereitung eines Wohnhauses gewinnen zu können, ist bevorzugt ein dritter Wärmetauscher vorgesehen, der in einem zweiten Kreislauf an den Kompressor angeschlossen ist. In diesem Falle dient der erste Wärmetauscher der Vorrichtung als Verdampfer und der dritte Wärmetauscher als Verflüssiger (Kondensator). Der zweite Wärmetauscher hat in diesem Fall keine Funktion.

Ermittelt ein Hygrostat bei bestimmten Außen- und Innentemperaturen eine zu hohe Luftfeuchtigkeit im Wintergarten, so wird die Vorrichtung automatisch derart gesteuert, daß der erste Wärmetauscher als Verdampfer und der zweite Wärmetauscher als Verflüssiger dienen. In diesem Falle hat der dritte Wärmetauscher keine Funktion.

Mit der erfindungsgemäßen Vorrichtung kann der Wintergarten bei Bedarf auch gekühlt werden. Hierzu dient der erste Wärmetauscher als Verflüssiger und der zweite Wärmetauscher als Verdampfer, wobei der Haupt-Strömungsweg zwischen den beiden Wärmetauschern unterbrochen ist, der zweite Wärmetauscher Luft aus der freien Atmosphäre ansaugt und der erste Wärmetauscher Luft in die freie Atmosphäre abgibt.

In einer bevorzugten Ausgestaltung der erfindungsgemäßen Vorrichtung ist eine gesonderte Heizung vorgesehen, die im Haupt-Strömungsweg unmittelbar hinter dem zweiten Wärmetauscher angeordnet ist.

Die erfindungsgemäße Vorrichtung läßt sich auch im Wärmepumpenbetrieb einsetzen, um z.B. den Wintergarten auch bei kühleren Außentemperaturen (von z.B. 12°C) zu erwärmen. Hierzu ist vorgesehen, daß das Gehäuse für einen Wärmepumpenbetrieb eine in die äußere Atmosphäre führende Ansaugöffnung sowie eine ebenfalls in die äußere Atmosphäre führende Ausblasöffnung aufweist, wobei im Strömungsweg zwischen der Ansaugöffnung und der Ausblasöffnung einer der Wärmetauscher als Verdampfer geschaltet ist, um Energie aus dem aus der äußeren Atmosphäre in das Gehäuse und wieder in die äußere Atmosphäre zirkulierenden Luftstrom zu entnehmen, und daß über den Kompressor die entnommene Energie einem als Kondensator dienenden Wärmetauscher zugeführt wird, um in einen Heizkreis des Wohnhauses oder des Wintergartens eingespeist zu werden.

Bei starker Sonneneinstrahlung müssen Wintergärten häufig abgeschattet werden. Beim Stand der Technik liegt die für die Abschattung verwendete Markise außerhalb der Glaswandung des Wintergartens. Die erfindungsgemäße Vorrichtung ermöglicht eine Anordnung der Markise innenseitig der Glaswandung des Wintergartens, wobei die zwischen der Wandung und der Markise durch Erwärmung der Luft gesammelte Sonnenenergie mittels der Vorrichtung zur Heizung beispielsweise des Hauses verwendet wird und gleichzeitig eine angenehme Temperierung des übrigen Wintergartens gewährleistet ist. Hierzu ist vorgesehen, daß in Einstrahlrichtung der Sonnenstrahlung hinter der Glaswandung des Wintergartens eine Markise derart ausfahrbar ist, daß zwischen der Wandung des Wintergartens und der Markise ein in bezug auf das Gesamtvolumen des Wintergartens kleiner Raum gebildet wird, in dem bei ansonsten abgeschaltetem Wintergarten die eingestrahlte Sonnenenergie zur Erwärmung der Luft führt, und daß eine Vorrichtung zum Steuern der Temperatur und/oder Luftfeuchtigkeit mit einer Ausblasöffnung sowie einer Ansaugöffnung derart an den zwischen der Markise und der Wandung gebildeten Raum angeschlossen ist, daß ein Luft-Kreislauf gebildet wird, der durch das Gehäuse der Vorrichtung geht, wobei die im Raum erwärmte Luft zumindest einen der Wärmetauscher passiert, welcher als Verdampfer wirkt, so daß der Luft die Wärme entzogen wird, welche über den Kompressor zu einem weiteren Wärmetauscher überführt wird, wo die Energie in einen Heizkreis eingespeist wird.

Nachfolgend ist ein Ausführungsbeispiel der Erfindung anhand der Zeichnung näher beschrieben. Es zeigt:

Fig. 1 eine Draufsicht auf einen neben einem Wohnhaus angeordneten Wintergarten;

Fig. 2 und 3 Seitenansichten des Wintergartens mit der erfindungsgemäßen Vorrichtung;

Fig. 4 eine schematische Darstellung der Vorrichtung zum Klimatisieren des Wintergartens und zur Energieentnahme, und

Fig. 5 einen Vertikalschnitt durch einen Wintergarten mit einer Markise zur Abschattung desselben.

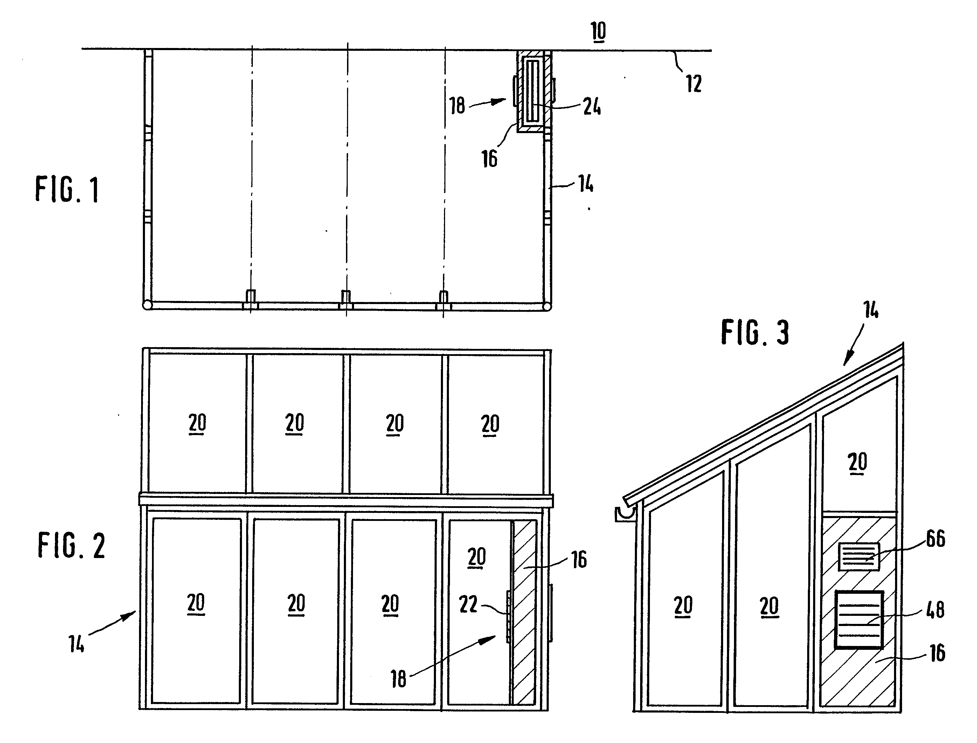

Fig. 1 zeigt ein neben einem Wohnhaus 10, dessen Wand mit dem Bezugszeichen 12 angedeutet ist, gelegenen Wintergarten 14. Im Wintergarten 14 ist mit einem kompakten Gehäuse 16 die Vorrichtung 18 zum Klimatisieren des Wintergartens sowie zum Gewinnen von Energie für das Wohnhaus untergebracht. Der Wintergarten 14 weist in herkömmlicher Weise eine Vielzahl von Glasscheiben 20 auf.

Die Fig. 2 und 3 zeigen den Wintergarten 14 sowie das Gehäuse 16 der Vorrichtung 18 zum Klimatisieren und zur Wärmegewinnung von der Seite.

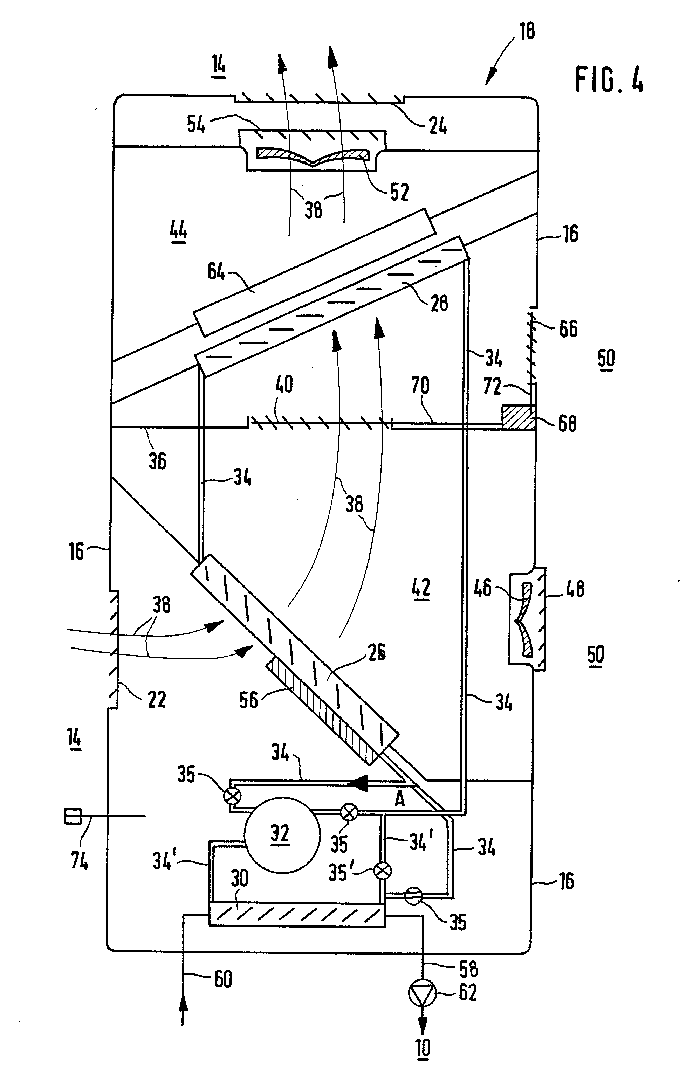

Gemäß Fig. 4 ist im Gehäuse 16 eine Ansaugöffnung 22 vorgesehen, durch die Luft aus dem Wintergarten 14 in das Gehäuse ansaugbar ist. Durch eine Ausblasöffnung 24 wird die Luft wieder in den Wintergarten 14 gefördert.

Das Gehäuse 16 enthält einen ersten, zweiten und dritten Wärmetauscher 26, 28 bzw. 30 sowie einen Kompressor 32, an den die Wärmetauscher wahlweise anschließbar sind. Zum Entfeuchten und Kühlen des Wintergartens 14 wirken wahlweise einer oder mehrere der Wärmetauscher derart mit dem Kompressor 32 zusammen, daß sie wahlweise entweder als Verdampfer oder als Verflüssiger - (Kondensator) dienen. Durch Kältemittel-Kreisläufe 34, 34' und Ventile 35, 35' sind wahlweise jeweils zwei der drei Wärmetauscher derart mit dem Kompressor 32 verbindbar, daß sie wahlweise entweder als Verdampfer oder Verflüssiger dienen können.

Eine Trennwand 36 liegt im Haupt-Strömungsweg 38 zwischen dem ersten und dem zweiten Wärmetauscher. Durch die Trennwand 36 werden eine erste Kammer 42 und eine zweite Kammer 44 gebildet, die durch eine schließbare Klappe 40 miteinander verbindbar sind.

Die erste Kammer 42 weist die Ansaugöffnung 22 auf und ist auf der der Ansaugöffnung gegenüberliegenden Seite des ersten Wärmetauschers 26 mit einem Ventilator 46 versehen, der Luft aus dem Inneren der ersten Kammer 42 in die äußere Atmosphäre 50 fördern kann. Eine Verschlußklappe 48 kann diese Verbindung unterbrechen.

In der zweiten Kammer 44 sind im Haupt-Strömungsweg 38 stromab des zweiten Wärmetauschers 28 ein weiterer Ventilator 52 sowie eine Verschlußklappe 54 angeordnet, durch welche Luft aus der zweiten Kammer 44 in den Wintergarten 14 gefördert werden kann.

Die erste Kammer 42 weist unterhalb des ersten Wärmetauschers 26 eine Kondenswasserwanne 56 auf. Weiterhin ist in der ersten Kammer 42 der Kompressor 32 sowie der dritte Wärmetauscher angeordnet. Der dritte Wärmetauscher 30 ist über einen Vorlauf 58 und einen Rücklauf 60 mit der Heizanlage oder der Warmwasseranlage des Wohnhauses 10 verbunden. Im Vorlauf 58 ist eine Umwälzpumpe 62 vorgesehen.

Weiterhin ist die zweite Kammer 44 mit einer Klappe 66 versehen, welche die zweite Kammer mit der äußeren Atmosphäre 50 verbindet. Ein Stellmotor 68 beaufschlagt über Stellstangen 70 bzw. 72 die Klappen 40 bzw. 66.

Die gesamte Vorrichtung 18 zum Klimatisieren und Energiegewinnen ist elektrisch gesteuert. Hierzu sind insbesondere Temperaturfühler (nicht gezeigt) vorgesehen, welche die Temperatur im Inneren des Wintergartens 14, die Außentemperatur und gegebenenfalls auch die Temperatur des Wasserkreislaufes 58, 60 der Heizanlage des Hauses 10 messen. Ein Hygrostat 74 mißt die Feuchtigkeit der Luft im Wintergarten 14.

Nachfolgend sollen die unterschiedlichen Funktionsweisen der Vorrichtung 18 näher erläutert werden.

1. Entfeuchten:

Ermittelt der Hygrostat 74 bei gegebenen Außen-und Innentemperaturen eine zu hohe Luftfeuchtigkeit im Wintergarten 14, bei der die Bildung von Kondenswasser insbesondere an den Scheiben 20 zu befürchten ist, so entfeuchtet die Vorrichtung 18 den Wintergarten 14. Hierzu werden durch Ventile der erste und der zweite Wärmetauscher in einen Kreislauf mit dem Kompressor 32 geschaltet. Der erste Wärmetauscher 26 dient als Verdampfer. Die durch die Ansaugöffnung 22 aus dem Wintergarten 14 in das Gehäuse 16 angesaugte Luft - (Haupt-Strömungsweg 38) passiert den ersten Wärmetauscher 26, wobei Wasser aus der Luft am Wärmetauscher 26 kondensiert und dabei Wärme in das Kältemittel im Wärmetauscher abgibt. Das Kondensat läuft in die Kondenswasserwanne 56. Am als Verdampfer dienenden ersten Wärmetauscher 26 wird also durch die Kondensation der Feuchtigkeit aus der Luft Energie aufgenommen. Das verdampfte Kältemittel (z.B. Frigen) wird in Richtung des Pfeiles A in den Kompressor 32 gesaugt und dort verdichtet. Unter hohem Druck gelangt es aus dem Kompressor 32 über die Leitung 34 (bei geöffnetem Ventil 35) zum zweiten Wärmetauscher 28, welcher nunmehr als Verflüssiger (Kondensator) dient. Am Verflüssiger wird die beim Übergang des Kältemittels aus der gasförmigen Phase in die flüssige Phase gewonnene Energie nach außen abgegeben, d.h. die im Haupt-Strömungsweg 38 zum zweiten Wärmetauscher 28 gelangende Luft wird wieder erwärmt, damit keine kalte Luft aus der Ausblasöffnung 24 in den Wintergarten 14 gefördert wird. Der vorstehend beschriebene Entfeuchtungsvorgang entspricht thermodynamisch etwa einem Kompressorkühlschrank. Zwischen dem Verdampfer und dem Verflüssiger ist ein Drosselorgan (nicht gezeigt) angeordnet.

2. Wärmerückgewinnung:

Bei günstigem Wetter (starke Sonneneinstrahlung bei kalten Außentemperaturen) dient die Vorrichtung 18 dazu, aus dem Wintergarten 14 durch die Sonneneinstrahlung gewonnene Energie für das Wohnhaus 10 nutzbar zu machen. Hierzu sind der erste und der dritte Wärmetauscher 26 bzw. 30 mit dem Kompressor 32 durch geeignete Leitungen - (nicht gezeigt) zu einem Kühlmittel-Kreislauf verbunden. Der erste Wärmetauscher 26 dient dabei als Verdampfer und der zweite Wärmetauscher 30 als Verflüssiger. Die Luft strömt entlang dem Haupt-Strömungsweg 38 durch das Gehäuse 16 - (die Klappen 48 und 66 sind also geschlossen). Die den ersten Wärmetauscher 26 (Verdampfer) passierende warme Luft aus dem Wintergarten 14 gibt Energie an den ersten Wärmetauscher 26 ab, so daß das Kältemittel verdampft. Nach Passieren des ersten Wärmetauschers 26 ist die Luft also abgekühlt. Das verdampfte Kältemittel gelangt in den Kompressor 32 und wird dort verdichtet. Im dritten Wärmetauscher, welcher hier als Verflüssiger dient, wird das Kältemittel verflüssigt, wobei Energie frei wird, die an den Heiz-Kreislauf 58, 60 des Hauses 10 abgegeben wird.

3. Be-und Entlüften:

Bei bestimmten Wetterverhältnissen, z.B. im Hochsommer, ist ein einfaches Be-und Entlüften des Wintergartens erwünscht. Hierzu wird die Klappe 40 geschlossen und die beiden Klappen 48 und 66 werden geöffnet. Der Haupt-Strömungsweg 38 ist somit unterbrochen. Stattdessen entstehen zwei unabhängige Lüftungssysteme. Zum einen wird über den Ventilator 46 Luft aus dem Wintergarten 14 durch die Ansaugöffnung 22 in die erste Kammer 42 gesaugt und an der geöffneten Klappe 48 vorbei in die frei Atmosphäre 50 geblasen. Hierdurch wird der Wintergarten 14 entlüftet.

Zum anderen wird mittels des Ventilators 52 Luft aus der freien Atmosphäre 50 an der Klappe 66 vorbei zur Ausblasöffnung 24 gesaugt, so daß frische Luft in den Wintergarten 14 gefördert wird.

Die Steuerung der Klappen 40, 48, 54, 66 erfolgt automatisch durch die elektronische Steuerung.

4. Kühlen:

Zum Kühlen des Wintergartens 14 wird die Klappe 40 geschlossen, während die übrigen Öffnungen, also insbesondere die Klappen 48 und 66, geöffnet sind. Die beiden Ventilatoren 46 und 52 sind in Betrieb. Der zweite Wärmetauscher 28 und der erste Wärmetauscher 26 sind an den Kompressor 32 angeschlossen. Der zweite Wärmetauscher 28 dient als Verdampfer: Aus der freien Atmosphäre 50 wird an der Klappe 66 vorbei warme Luft zum zweiten Wärmetauscher - (Verdampfer) gesaugt. Die warme Luft gibt am zweiten Wärmetauscher 28 Wärme ab, so daß das Kältemittel verdampft. Nach Passieren des zweiten Wärmetauscher 28 ist die Luft somit abgekühlt. Es gelangt also durch die Ausblasöffnung 24 kalte Luft in den Wintergarten 14. Damit der Kältemittel-Kreislauf geschlossen ist, dient in dieser Funktion der erste Wärmetauscher 26 als Verflüssiger. Die am zweiten Wärmetauscher 28 (Verdampfer) vom Kältemittel aufgenommene Energie wird am zweiten Wärmetauscher 26 (Verflüssiger) frei und an die Luft abgegeben, welche durch die Ansaugöffnung 22 bei geschlossener Klappe 40 zur geöffneten Klappe 48 strömt. Es wird also aus dem Wintergarten 14 stammende Luft erwärmt in die äußere Atmosphäre 50 abgegeben. Das System wirkt wie ein herkömmlicher Kompressor-Kühlschrank. Der dritte Wärmetauscher 30 ist in dieser Funktion nicht in Betrieb.

5. Heizen:

Um den Wintergarten 14 zu heizen, ist eine gesonderte Elektroheizung 64 vorgesehen. Statt der Elektroheizung kann auch ein Wasser-Wärmetauscher vorgesehen sein. Die ersten, zweiten und dritten Wärmetauscher 26, 28 bzw. 30 sind beim Heizen des Wintergartens nicht in Betrieb. Die Klappen 48, 66 sind geschlossen, während die Klappe 40 geöffnet ist. Mittels des Ventilators 52 wird Luft entlang dem Haupt-Strömungsweg 38 aus dem Wintergarten 14 gesaugt und erwärmt aus der Ausblasöffnung 24 in denselben zurückgeführt.

Wie vorstehend beschrieben, ermöglicht die erfindungsgemäße Vorrichtung 18 mit einer geringen Anzahl von Aggregaten, die unterschiedliche Funktionen übernehmen können, sowohl eine Entfeuchtung des Wintergartens, eine Wärmegewinnung für das Wohnhaus, ein Be-und Entlüften des Wintergartens, sowie dessen Kühlung und Heizung. Die gesamte Anlage kann vollautomatisch gesteuert werden. Es sind also keinerlei Eingriffe seitens der Hausbewohner erforderlich.

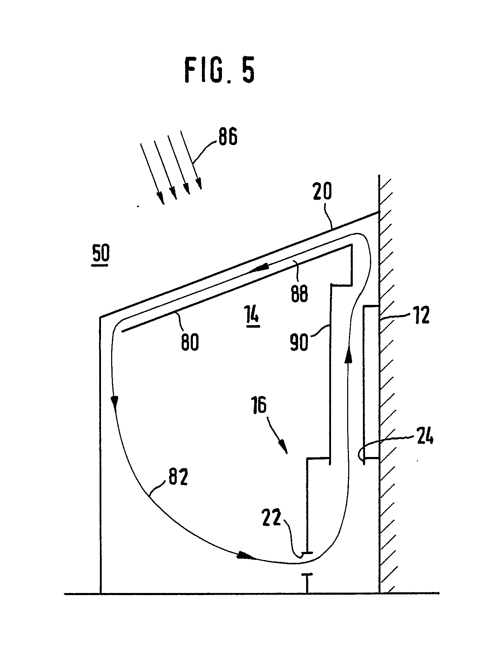

Fig. 5 zeigt einen Wintergarten, der mittels einer Markise 80 abgeschattet werden kann. Zwischen der Markise 80 und der Glaswand 20 des Wintergartens 14 wird ein langgestreckter flacher Raum 88 gebildet, der klein ist im Vergleich zum übrigen Volumen des Wintergartens 14. Die in Richtung 86 einfallende Sonnenstrahlung wird durch die Markise 80 vom Inneren des Wintergartens 14 ferngehalten und erwärmt die Luft im Raum 88.

Vom Gehäuse 16 der Vorrichtung zum Steuern der Temperatur und/oder Luftfeuchtigkeit im Wintergarten, wie sie vorstehend beschrieben ist, führt ein Kanal 90 zu einem oberen Einlaß in den Raum 88 zwischen der Markise 80 und der Glaswand 20 des Wintergartens (s. Fig. 5). Der Ventilator 52 und die Öffnungen im Gehäuse sind so geschaltet, daß der Luftstrom aus der oberen Öffnung 24 des Gehäuses 16 in den Kanal 90 eintritt und ein Luft-Kreislauf 82 gemäß Fig. 5 entsteht. Dieser Kreislauf 82 bewirkt, daß die im Raum 88 durch die Sonneneinstrahlung erwärmte Luft in Richtung der Pfeile in die Öffnung 22 in das Gehäuse 16 der Vorrichtung eintritt und dort am Wärmetauscher 26, der als Verdampfer wirkt, abgekühlt wird. Die abgekühlte Luft wird durch die Öffnung 24 in den Kanal 90 geblasen, so daß der Kreislauf 82 geschlossen ist. Auf diese Weise wird der Wintergarten angenehm beschattet und temperiert, wobei die zwischen der Markise 80 und der Glaswand 20 eingefangene Sonnenenergie gleichzeitig in den Heizkreislauf des Wohnhauses oder auch zur Heizung des Wintergartens selbst verwendet werden kann. Wichtig ist, daß der Kanal 90 zum höher gelegenen Abschnitt des Raumes 88 führt. Für eine gleichmäßige Verteilung des Kreislaufs 82 durch den Raum 88 sorgen geeignete Führungen im Anschluß an den Kanal 90.

**Ansprüche**

1. Vorrichtung zum Steuern der Temperatur und/oder Luftfeuchtigkeit in einem Wintergarten - (14),
**gekennzeichnet** durch
ein Gehäuse (16) mit
-zumindest einer Ansaugöffnung (22), durch die Luft aus dem Wintergarten (14) in das Gehäuse - (16) gesaugt wird,
-zumindest einer Ausblasöffnung (24), durch die Luft aus dem Gehäuse (16) in den Wintergarten - (14) gefördert wird,
-zumindest einem ersten und einem zweiten Wärmetauscher (26, 28) im Haupt-Strömungsweg - (38) der Luft zwischen der Ansaugöffnung (22) und der Ausblasöffnung (24) und

-einem Kompressor (32), der mit einem die beiden Wärmetauscher (26, 28) enthaltenden ersten Flüssigkeitskreislauf (34) verbunden ist.

2. Vorrichtung nach Anspruch 1,
dadurch **gekennzeichnet**,
daß zur Wärmegewinnung aus dem Wintergarten ein dritter Wärmetauscher (30) vorgesehen ist, der in einem zweiten Kreislauf (34') an den Kompressor (32) anschließbar ist, daß der zweite Kreislauf (34') parallel zum ersten Kreislauf (34) geschaltet ist und daß der dritte Wärmetauscher (30) mit einem Vor- und einem Rücklauf (58, 60) der Heizungsanlage eines Wohnhauses (10) verbunden ist.

3. Vorrichtung nach einem der Ansprüche 1 oder 2,
dadurch **gekennzeichnet**,
daß im Gehäuse (16) zwei Kammern (42, 44) abgetrennt sind, daß in der ersten Kammer (42) der erste Wärmetauscher (26) sowie eine Kondenswasserwanne (56) angeordnet sind, daß in der zweiten Kammer (44) der zweite Wärmetauscher (28) angeordnet ist, daß die erste Kammer die Ansaugöffnung (22) aufweist und durch einen Ventilator (46) und eine Klappe (48) mit der freien Atmosphäre (50) verbunden ist, daß die erste und die zweite Kammer durch eine schließbare Klappe - (40) verbunden sind und daß die zweite Kammer - (44) durch einen Ventilator (52) und eine Klappe - (54) mit der Ausblasöffnung (24) verbunden ist.

4. Vorrichtung nach einem der vorhergehenden Ansprüche,
dadurch **gekennzeichnet**,
daß zum Entfeuchten des Wintergartens (14) der erste Wärmetauscher (26) als Verdampfer und der zweite Wärmetauscher (28) als Verflüssiger - (Kondensator) dienen.

5. Vorrichtung nach einem der Ansprüche 2 bis 4,
dadurch **gekennzeichnet**,
daß zur Wärmegewinnung aus dem Wintergarten - (14) für das Wohnhaus (10) der erste Wärmetauscher (26) als Verdampfer und der dritte Wärmetauscher (30) als Verflüssiger dienen.

6. Vorrichtung nach einem der vorhergehenden Ansprüche,
dadurch **gekennzeichnet**,
daß zum Kühlen des Wintergartens (14) der erste Wärmetauscher (26) als Verflüssiger und der zweite Wärmetauscher (28) als Verdampfer dienen, wobei der Haupt-Strömungsweg (38) zwischen dem ersten und dem zweiten Wärmetauscher unterbrochen ist, der zweite Wärmetauscher (28) Luft aus der freien Atmosphäre (50) ansaugt und der erste Wärmetauscher (26) Luft in die freie Atmosphäre (50) abgibt.

7. Vorrichtung nach einem der vorhergehenden Ansprüche,
dadurch **gekennzeichnet**,
daß zum Heizen des Wintergartens (14) eine gesonderte Heizung (64) vorgesehen ist.

8. Vorrichtung nach einem der vorhergehenden Ansprüche,
dadurch **gekennzeichnet**,
daß das Gehäuse (16) für einen Wärmepumpenbetrieb eine in die äußere Atmosphäre (50) führende Ansaugöffnung sowie eine ebenfalls in die äußere Atmosphäre führende Ausblasöffnung aufweist, wobei im Strömungsweg zwischen der Ansaugöffnung und der Ausblasöffnung einer der Wärmetauscher (26) als Verdampfer geschaltet ist, um Energie aus dem aus der äußeren Atmosphäre (50) in das Gehäuse (16) und wieder in die äußere Atmosphäre zirkulierenden Luftstrom zu entnehmen, und daß über den Kompressor (32) die entnommene Energie einem als Kondensator - (30) dienenden Wärmetauscher zugeführt wird, um in einen Heizkreis des Wohnhauses oder des Wintergartens eingespeist zu werden.

9. Wintergarten (14),
dadurch **gekennzeichnet**,
daß in Einstrahlrichtung (86) der Sonnenstrahlung hinter der Glaswand (20) des Wintergartens eine Markise (80) derart ausfahrbar ist, daß zwischen der Glaswand (20) des Wintergartens und der Markise (80) ein in bezug auf das Gesamtvolumen des Wintergartens kleiner Raum (88) gebildet wird, in dem bei ansonsten abgeschattetem Wintergarten die eingestrahlte Sonnenenergie die Luft erwärmt, und daß eine Vorrichtung zum Steuern der Temperatur und/oder Luftfeuchtigkeit gemäß einem der Ansprüche 1-7 mit einer Ausblasöffnung (24) sowie einer Ansaugöffnung (22) derart an den zwischen der Markise (80) und der Wandung (20) gebildeten Raum (88) angeschlossen ist, daß ein Luft-Kreislauf (82) gebildet wird, der durch das Gehäuse (16) der Vorrichtung geht, wobei die im Raum (88) erwärmte Luft zumindest einen der Wärmetauscher (26) passiert, welcher als Verdampfer wirkt, so daß der Luft Wärme entzogen wird, welche über den Kompressor (32) zu einem weiteren Wärmetauscher (30) überführt wird, wo die Energie in einen Heizkreis eingespeist wird.

10. Wintergarten nach Anspruch 9,
dadurch **gekennzeichnet**,
daß der Heizkreis die Heizung eines Wohnhauses, dessen Brauchwasser und/oder den Wintergarten heizt.

FIG. 1

FIG. 2

FIG. 3

FIG. 4

0 231 789

# FIG. 5